# FASCICULE DE BREVET EUROPEEN

(11) **EP 2 375 906 B1**
(45) Date de publication et mention de la délivrance du brevet: **06.07.2016**
(21) Numéro de dépôt: 10706295.2
(22) Date de dépôt: 12.01.2010
(51) Int. Cl.: A01N 59/00, A01N 59/02, A01N 59/04, A01N 59/06, A01N 59/12, A01N 59/14, A01N 59/16, A01N 59/20, A01N 25/04, A01P 1/00, A01P 3/00, A01P 7/04, C05G 1/00

(54) **UTILISATION D'UNE COMPOSITION MINERALE LIQUIDE POUR AMELIORER LA REPONSE ADAPTATIVE DES PLANTES A UN CHANGEMENT DES CONDITIONS D'ENVIRONNEMENT**
VERWENDUNG EINER FLÜSSIGEN MINERALIENZUSAMMENSETZUNG ZUR VERBESSERUNG DER ADAPTIVEN REAKTION VON PFLANZEN AUF VERÄNDERTE UMWELTBEDINGUNGEN
USE OF A LIQUID MINERAL COMPOSITION FOR IMPROVING THE ADAPTIVE RESPONSE OF PLANTS TO A CHANGE IN ENVIRONMENTAL CONDITIONS

(30) Priorité: 13.01.2009 FR 0950151
(43) Date de publication de la demande: 19.10.2011
(73) Titulaire: PRP Holding, 75755 Paris (FR)
(72) Inventeur: DARIDON, Bruno, 54220 Malzeville (FR); VEYRIER, Thibaut, 58460 Corvol L'orgueilleux (FR)
(74) Mandataire: Orsini, Fabienne
(86) Numéro de dépôt international: PCT/FR2010/050042
(87) Numéro de publication internationale: WO 2010/081987

(56) Documents cités:
- WO-A-91/13844
- US-A- 3 558 300
- US-A- 4 652 294

## Description

### DOMAINE DE L'INVENTION

La présente invention se rapporte au domaine des compositions de matières fertilisantes permettant de préserver ou améliorer l'état sanitaire des plantes, utilisables en agriculture, horticulture, arboriculture ou en prairie d'élevage. Elle concerne plus particulièrement le domaine des compositions favorisant les systèmes de défense des plantes à l'encontre d'agressions extérieures biotiques ou abiotiques.

### ART ANTERIEUR

La performance des plantes, en termes de croissance, de développement, d'accumulation de biomasse et de rendement, dépend notamment de leur capacité d'adaptation à des changements de conditions de leur environnement, ce qui inclut les événements d'agression physique, chimique et biologique.

A titre d'illustration, on a observé que des évènement d'agression tels que des stress hydrique, osmotique ou thermique constituent des facteurs limitants sur la croissance des plantes, et donc sur le niveau de productivité dans les domaines agricole, horticole, arboricole et de prairie d'élevage. Des plantes exposées à la chaleur ou à des conditions de sécheresse présentent classiquement de faibles rendements en biomasse végétale, en semences, en fruits et autres produits comestibles par l'homme ou l'animal, y compris le bétail. Des pertes de récoltes, y compris des pertes en rendement de matériel végétal valorisable, par exemple dans la culture du riz, du maïs ou du blé, provoqués par des évènements de stress, contribuent à la pénurie alimentaire dans certains pays en voie de développement.

Les évènements d'agression induisent chez les plantes des mécanismes physiologiques de défense qui mobilisent des ressources pour permettre la survie de la plante et pour préserver son état sanitaire au détriment des ressources utilisées pour maintenir le niveau de rendement initial en matériel végétal d'intérêt.

De manière générale, on connaît dans l'état de la technique une variété de solutions techniques, de nature biologique ou chimique, destinées à protéger au moins partiellement les plantes des conséquences des évènements d'agression externes.

On peut citer en particulier les techniques de modification génétique des plantes destinées à permettre la production de plantes transgéniques possédant un caractère transmissible de résistance améliorée au stress, comme cela est décrit par exemple dans les demandes internationales PCT n°WO2007/125531, WO2007/060514, WO2008/050350 et W2008/145675. Il s'agit toutefois de solutions techniques spécifiques, longues et coûteuses, qu'il faut réitérer pour chaque variété végétale à transformer génétiquement. De plus, dans de nombreux pays, il existe aujourd'hui des interdictions réglementaires générales ou quasi-générales à l'encontre de la culture en plein champ de variétés de plantes génétiquement modifiées.

Selon d'autres voies de résolution du problème de la résistance des plantes à des événements de stress, sont aujourd'hui commercialisées des compositions fertilisantes organiques ou organo-minérales, en particulier des compositions liquides, comme celles décrites dans la demande de brevet US 4,654,294, qui sont présentées pour posséder des propriétés globales ou spécifiques à l'encontre des carences en éléments nutritifs. On connaît aussi des compositions destinées à stimuler les réactions de défense naturelles des plantes à l'encontre d'agressions par des organismes biologiques pathogènes, par exemple des compositions contenant des substances telles que des molécules extraites de plantes, des hydrolysats d'agro-polymères, des extraits de micro-organismes, des polysaccharides naturels ou modifiés, des phytohormones, des peptides ou des protéines ou encore des substances agonistes ou antagonistes de protéines végétales connues pour être impliquées dans les mécanisme de défense des plantes.

Les compositions ci-dessus , par exemple celles décrites dans WO 91/16844, peuvent se révéler satisfaisantes, en particulier pour pallier des carences en éléments nutritifs ou bien pour stimuler les défenses végétales à l'encontre d'organismes biologiques pathogènes comme certains virus, microorganismes ou insectes.

Toutefois, à la connaissance du demandeur, il n'existe pas de composition purement minérale capable de protéger ou stimuler les plantes à l'encontre d'évènements d'agression de type abiotiques, tels que des conditions de stress hydrique, osmotique ou thermique et à la fois de contribuer à la réaction de la plante vis-à-vis des agresseurs riches en chitine tels que les champignons.

Dans tous les cas, compte tenu de l'importance économique et de l'importance pour l'alimentation humaine ou animale de disposer de plantes possédant un bon état sanitaire, en particulier de disposer de plantes présentant de bons rendements de production dans le domaine agricole, horticole, arboricole et des prairies d'élevage, il existe un besoin dans l'état de la technique d'une disponibilité pour le public de compositions alternatives ou améliorées, à coût accessible, par rapport aux compositions connues.

### RESUME DE L'INVENTION

La présente invention concerne l'utilisation d'une composition minérale liquide, ayant la formule (I) spécifiée en détail dans la suite de la présente description, pour améliorer la réponse adaptative d'une plante à un changement des conditions d'environnement.

La composition minérale liquide de formule (I) consiste en une composition concentrée qui est utilisée, pour son utilisation par pulvérisation foliaire, sous une forme diluée dans de l'eau ou dans un liquide aqueux.

Plus particulièrement, l'invention est relative à l'utilisation d'une composition minérale liquide, ayant la formule (I) décrite plus loin, pour améliorer la réponse adaptative d'une plante à un évènement de stress biotique ou abiotique.

Les évènements de stress abiotiques incluent notamment un stress hydrique, un stress osmotique, un stress thermique, ou encore une carence nutritionnelle

Les évènements de stress biotiques incluent notamment un contact avec, ou une infection par, des organismes biologiques, y compris les microorganismes pathogènes contenant de la chitine, ainsi que des substances produites par, ou dérivées de, ces divers organismes biologiques, y compris la chitine.

### DESCRIPTION DES FIGURES

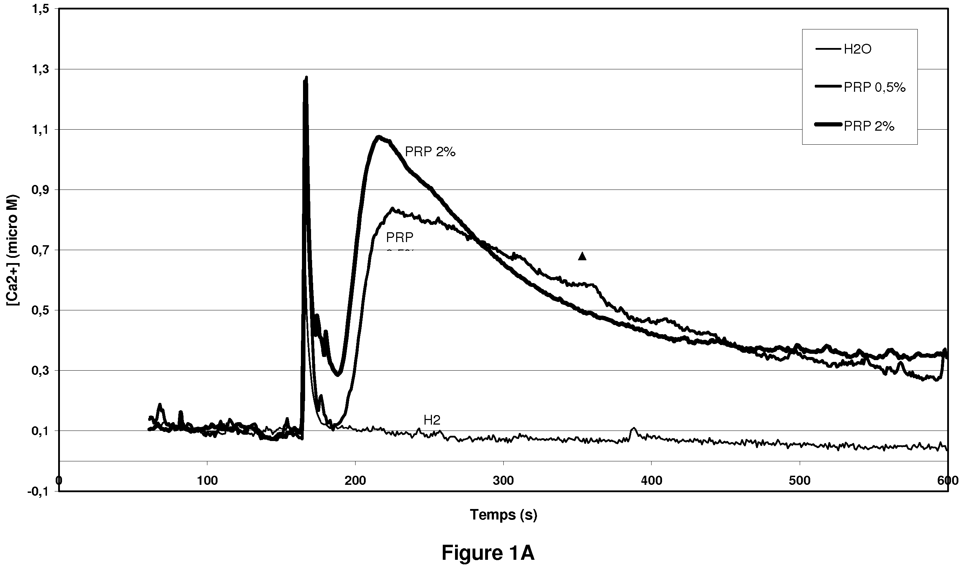

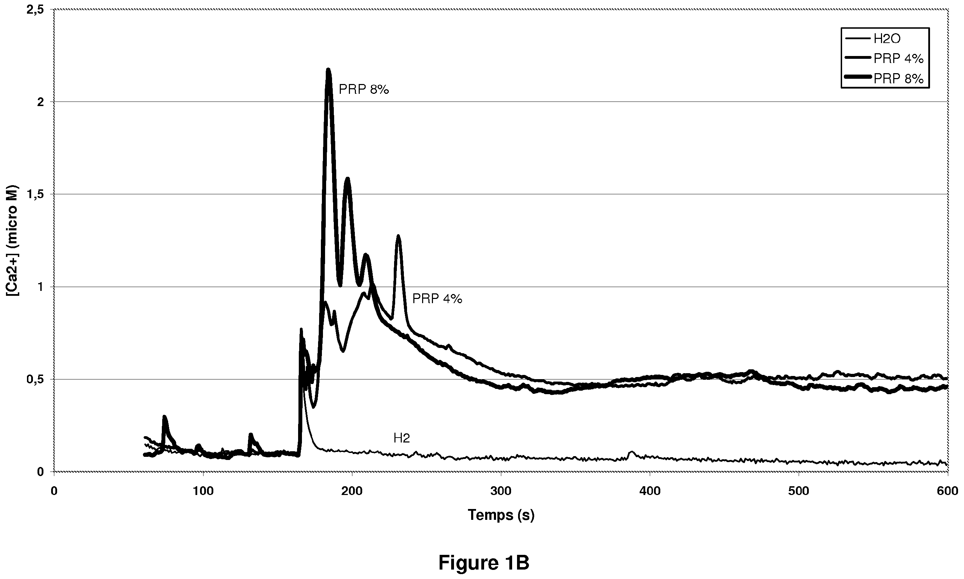

Les **Figures 1A** **et** **1B** illustrent les courbes de la réponse calcique chez des plantules de *Arabidopsis thaliana* agées de dix jours, induite par un traitement avec des quantités croissantes d'une composition de formule (I). En abscisse : le temps, exprimé en secondes. En ordonnées : la concentration d'ions Ca²⁺ dans le cytosol, exprimée en micro-molaire (µM).

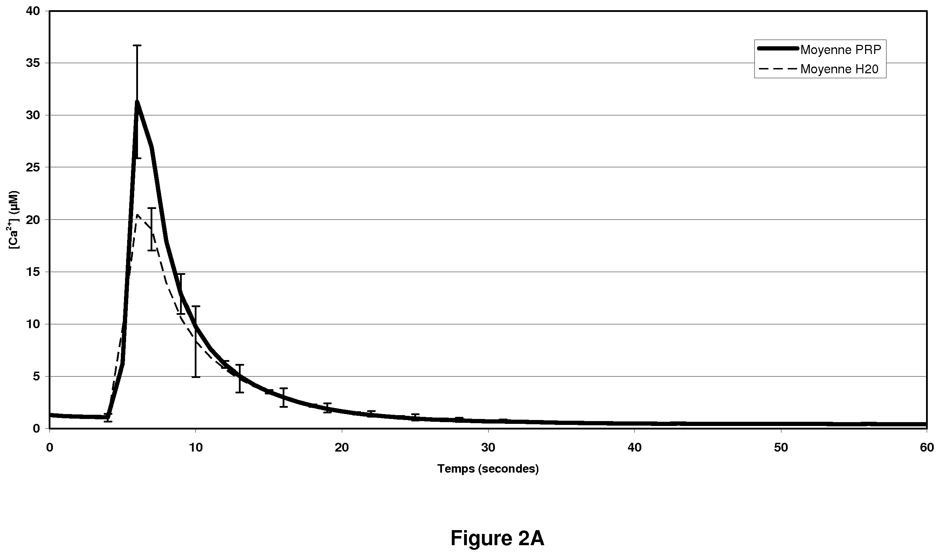

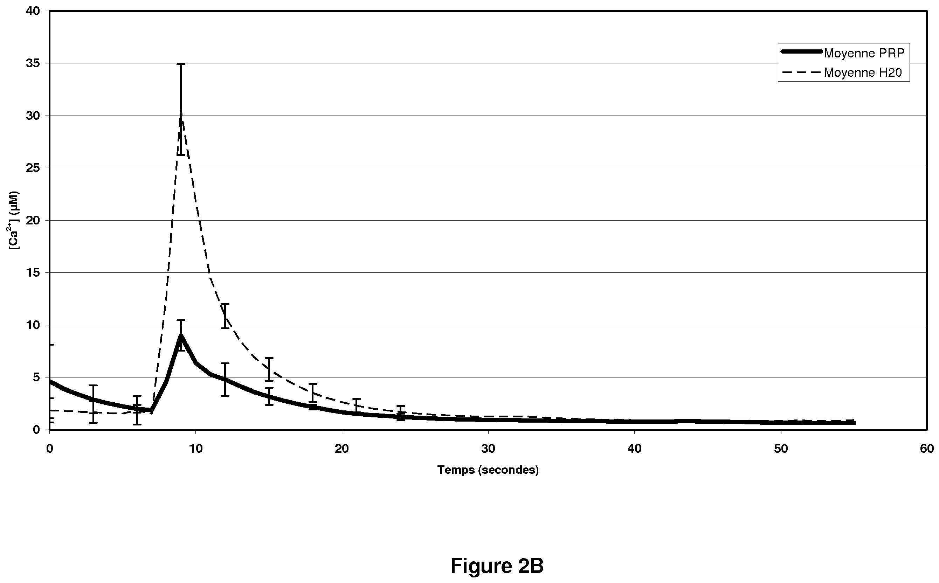

Les **Figures 2A** **et** **2B** illustrent les courbes de la réponse calcique chez des plantules de *Arabidopsis thaliana* agées de dix jours, induite par un choc thermique froid, 24 heures après un prétraitement des plantes en présence ou en absence d'une composition de formule (I). Les figures 2A et 2B illustrent les résultats de deux séries d'essais identiques. En abscisse :
   le temps, exprimé en secondes. En ordonnées : la concentration d'ions Ca²⁺ dans le cytosol, exprimée en micro-molaire (µM).

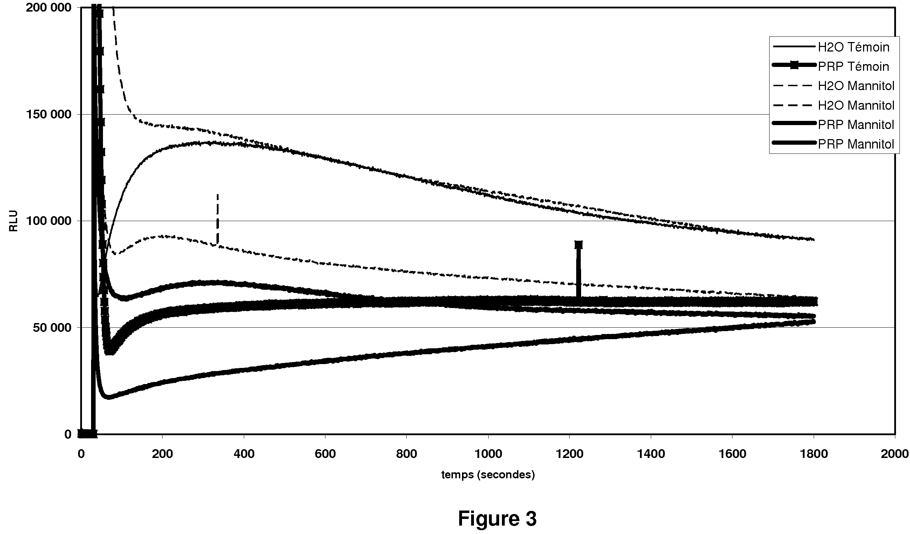

La **Figure 3** illustre les courbes de production peroxyde d'hydrogène (H₂O₂) chez des plantules de *Arabidopsis thaliana* âgées de dix jours, induite par un choc osmotique, 24 heures après un prétraitement des plantes en présence ou en absence d'une composition de formule (I). En abscisse : le temps, exprimé en secondes. En ordonnées : Unités arbitraires de luminescence (RLU).

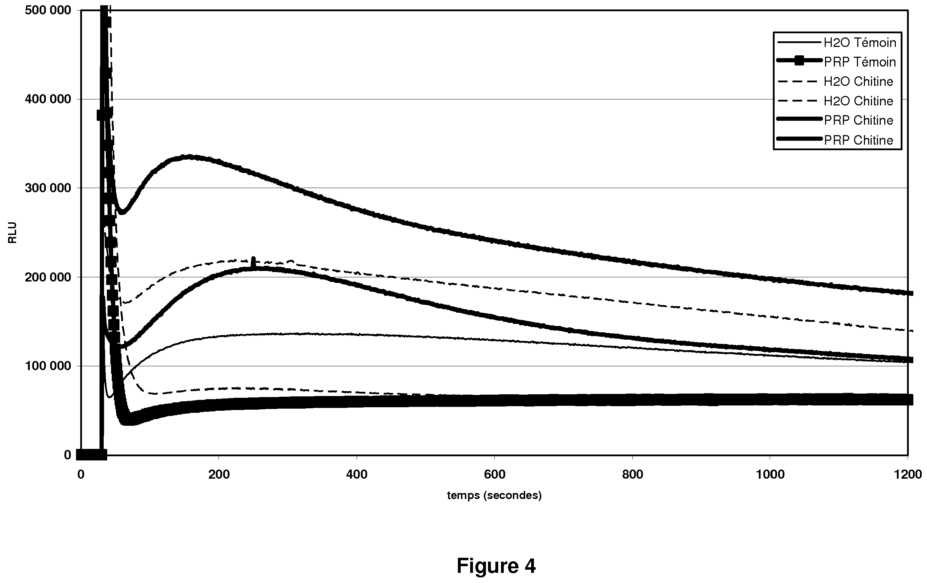

La **Figure 4** illustre les courbes de production peroxyde d'hydrogène (H₂O₂) chez des plantules de *Arabidopsis thaliana* âgées de dix jours, induite par un choc éliciteur par une substance chimique, la chitine, 24 heures après un prétraitement des plantes en présence ou en absence d'une composition de formule (I). En abscisse : le temps, exprimé en secondes. En ordonnées : Unités arbitraires de luminescence (RLU).

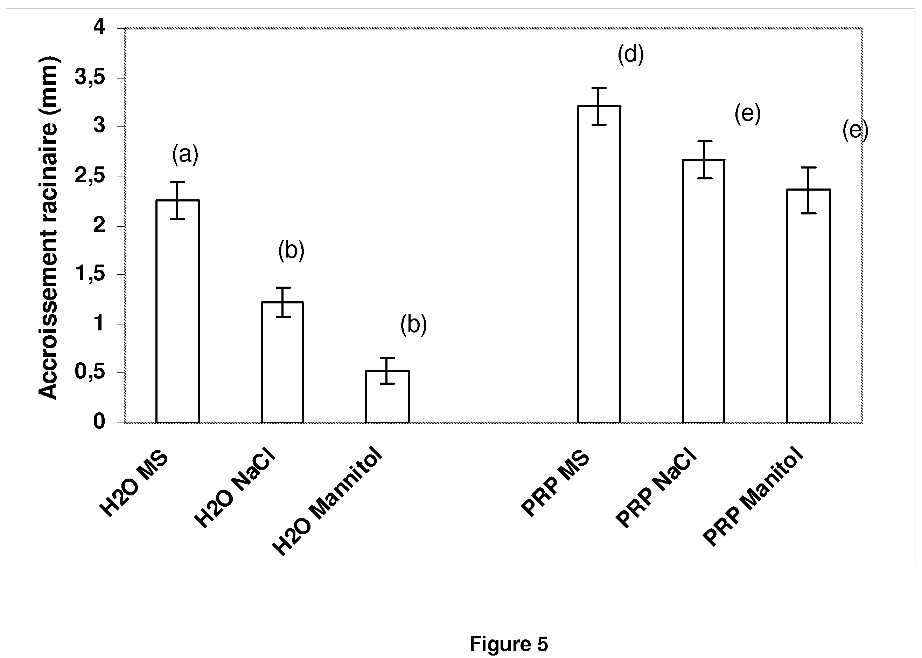

La **Figure 5** illustre les effets à long terme d'une composition de formule (I) sur le développement de plantules de *Arabidopsis thaliana* préalablement soumises à différents évènements de stress. En ordonnées : mesure de la croissance des plantules, exprimée en centimètres de pousse de racines pendant les deux semaines d'application des conditions de stress. Les histogrammes en abscisse : (a) plantules témoin non traitées et non soumises à une condition de stress ; (b) plantules témoin non traitées soumises à un stress hydrique par du NaCl ; (c) plantules non traitées soumises à un stress osmotique avec du mannitol ; (d) plantules traitées avec une composition de formule (I) et non soumises à une condition de stress ; (e) plantules traitées avec une composition de formule (I) et soumises à un stress hydrique par du NaCl ; (f) plantules traitées avec une composition de formule (I) et soumises à un stress osmotiques avec du mannitol.

### DESCRIPTION DETAILLEE DE L'INVENTION

Après de longues recherches, le demandeur a mis au point une composition minérale liquide dont il a montré qu'elle possède la propriété d'améliorer la réponse adaptative des plantes à un changement des conditions d'environnement.

En particulier, il est montré qu'une composition minérale liquide de formule (I) telle que définie plus loin dans la présente description, possède, lorsqu'elle est utilisée à une dilution appropriée, la propriété d'améliorer la réponse adaptative des plantes en réaction à un changement d'une variété de conditions d'environnement incluant un choc hydrique, un choc osmotique et une réaction à l'encontre de la mise en contact avec certaines substances provenant d'organismes biologiques tels que les champignons.

La présente invention concerne ainsi l'utilisation d'une composition minérale liquide pour pulvérisation foliaire comprenant la formule (I) suivante :

| | |
|---|---|
| - azote ammoniacal total (N%) | 0,08% à 2% |
| - potassium exprimé en K₂O (%) | 3% à 6% |
| - Magnésium exprimé en MgO (%) | 0,4% à 0,8% |
| - sodium exprimé en Na₂O (%) | 1 % à 2% |
| - calcium exprimé en CaO (%) | 0% à 0,5% |
| - sulfates totaux exprimés en SO₃ (%) | 3% à 6% |
| - phosphore total exprimé en P₂O₅ (%) | 0% |
| - Chlorures CI (%) | 1% à 2% |
| - bicarbonates (% de HCO₃) | 1,2% à 3,0% |
| - Bore (%) | 0,1 % à 0,2% |
| - cuivre (%) | 0,018% à 0,03% |
| - manganèse (%) | 0,00005% à 0,006% |
| - iode (%) | 0,02% à 0,04% |
| - zinc (%) | 0,00005% à 0,006% |
| - fer (mg/kg) | 0,0002% à 0,003% |
| | |
| - eau | Quantité suffisante pour 100% |

les pourcentages consistant en des pourcentages en poids par rapport au poids total de la composition ,
pour améliorer la réponse adaptative des plantes à un changement des conditions d'environnement.

La composition minérale de formule (I) consiste en une composition minérale sous forme concentrée. Pour son utilisation par pulvérisation foliaire, la composition minérale de formule (I) est diluée de manière appropriée dans de l'eau ou dans un liquide aqueux.

Pour vérifier qu'une composition possède les caractéristiques qualitatives et quantitatives en éléments minéraux de la composition de formule (I) ci-dessus, l'homme du métier se réfèrera avantageusement aux techniques bien connues de dosage pour ce type de compositions.

A titre illustratif, l'homme du métier peut utiliser les techniques d'analyse de composition suivantes :
(i) pour le dosage de l'azote ammoniacal, on utilise la technique décrite par Conway, (Directive Communautaire Européenne n° 71/393, telle que modifiée par les directives européennes n° 73/47 et n° 81/681),
(ii) pour le dosage du potassium, on utilise la technique de dosage du K20 selon la norme française n° NF U 44-140 et la technique d'émission de flamme,
(iii) pour le dosage du magnésium, on utilise la technique de dosage décrite par la norme française n° NF U 44-140 et n° NF U 44-146 et la technique par absorption atomique,
(iv) pour le dosage du sodium Na20, on utilise la technique de dosage décrite par la norme française n° NF U 44-140 et la technique de photométrie de flamme,
(v) pour le dosage du calcium, on utilise la méthode par spectrométrie d'absorption atomique définie dans la norme française n° NF U 44-140 et la technique par absorption atomique,
(vi) pour le dosage des sulfates totaux, on utilise la méthode définie selon la norme européenne n°CEE 8.1 et la technique par gravimétrie,
(vii) pour le dosage du phosphore total exprimé en pourcentage (poids/poids) de P2O5, on utilise un technique définie selon les normes NF U 42-241 (CEE 3.1) et NF U 42-246 (spectrophotométrie)
(viii) pour le dosage des chlorures, on utilise la technique définie dans la norme française n° NF U 42-371,
(ix) pour le dosage des bicarbonates, on utilise la technique de dosage des ions hydrogénocarbonate selon la technique décrite dans la norme n° NF EN ISO 9963-1 (T 90-036)
(x) pour le dosage du bore, on utilise la technique de dosage définie selon la norme européenne n° CEE 9-1 et n° CEE 9-5, si la concentration finale est inférieure à 10% (poids/poids), ou la norme européenne n° CEE 10-1 et n° CEE 10-5 si la concentration finale est supérieure à 10% (poids/poids),
(xi) pour le dosage du cuivre, on utilise la technique définie selon la norme européenne n° CEE 9-1 et n° CEE 9-7 et la technique par absorption atomique,
(xii) pour le dosage du manganèse, on utilise la technique de dosage définie selon la norme n° ICP NF EN ISO 11885
(xiii) pour le dosage de l'iode, on utilise la technique suivante : l'échantillon est réduit en cendres selon la méthode préparative de Grote-Krekeler (dans de petites cuvettes en porcelaine, glisser un tube de quartz - norme DIN 53 474). L'iode gazeux est absorbé dans de la soude caustique, puis on procède au dosage photométrique selon la méthode de Sandell-Kolthoff (avec influence catalytique du couple rédox Ce(IV)/ As(III) à 436 nm).
(xiv) pour le dosage du zinc, on utilise la technique de dosage définie selon la norme ICP NF EN ISO 11885, et
(xv) pour le dosage du fer, on utilise la technique de dosage définie selon la norme ICP NF EN ISO 11885.

Dans des modes de réalisation préférés, la composition de formule (I) consiste en une composition comprenant exclusivement des éléments ou composés minéraux. Dans ces modes de réalisation, la composition de formule (I) consiste en une composition purement ou exclusivement minérale et ne contient en conséquence aucun élément ou composé organique, c'est-à-dire aucun composé hydrocarboné. A titre illustratif, la composition de formule (I) ne comprend pas de vitamines, d'acides aminés, de sucres, d'acides ou de bases organiques, etc.

Selon d'autres caractéristiques, la composition de formule (I), se présente dans une forme concentrée, qui est en général diluée avant son utilisation sur les plantes.

Pour fabriquer la composition de formule (I) ci-dessus, l'homme du métier se réfèrera avantageusement au contenu technique de la présente description, y compris les exemples.

Par « plante », on entend selon l'invention les plantes monocotylédones et les plantes dicotylédones.

Les plantes, au sens de l'invention, englobent celles utilisées pour l'agriculture, pour l'horticulture, pour l'arboriculture et pour les prairies d'élevage.

Sont englobées notamment les plantes céréalières de grande culture, les arbres fruitiers, et les plantes à fleurs. Les plantes englobent notamment le blé, l'orge, le colza, le maïs et le riz et les espèces arboricoles comme les pommiers, les poiriers, les pruniers, les pêchers, les abricotiers, etc.

Les dicotylédones englobent les espèces et familles suivantes : *Nymphaeaceae, Ceratophyllaceae, Ranunculaceae, Papaveraceae, Fumariaceae, Ulmaceae, Cannabinaceae, Urticaceae, Myricaceae, Fagaceae, Betulaceae, Aizoaceae, Chenopodiaceae, Portulacaceae, Caryophyllaceae, Polygonaceae, Plumbaginaceae, Elatinaceae,* *Guttiferae* / *Hypericaceae* / *Clusiaceae, Malvaceae, Malvaceae, Droseraceae, Violaceae, Cucurbitaceae, Salicaceae, Cruciferae l Brassicaceae, Resedaceae, Empetraceae, Ericaceae, Pyrolaceae, Monotrooaceae, Primulaceae, Grossulariaceae, Crassulaceae, Saxifragaceae, Rosaceae,* *Leguminosae* / *Fabaceae, Elaeagnaceae, Halogaraceae, Lythraceae, Onagraceae, Viscaceae, Celastraceae, Aquifoliaceae, Euphorbiaceae, Rhamnaceae, Linaceae, Polygalaceae, Aceraceae, Oxalidaceae, Geraniaceae, Balsaminaceae, Araliaceae,* *Umbelliferae* / *Apiaceae, Gentianaceae, Apocynaceae, Solanaceae, Convolvulaceae, Cuscutaceae, Menyanthaceae, Boraginaceae, Lamiaceae, Hippuridaceae, Callitrichaceae, Plantaginaceae, Buddlejaceae, Oleaceae, Scrophulariaceae, Orobanchaceae, Lentibulariaceae, Campanulaceae, Rubiaceae, Caprifoliaceae, Adoxaceae, Valerianaceae, Dipsacaceae et* *Compositae* / *Asteraceae.*

Par « réponse adaptative » d'une plante, on entend toute modification physiologique détectable d'une plante consécutive à l'application à ladite plante d'un changement rapide des conditions de son environnement. Les modifications physiologiques détectables englobent toute modification dans la quantité ou la concentration d'un ou plusieurs métabolites tissulaires, y compris intracellulaires ou encore toute modification qualitative ou quantitative détectable d'activité(s) enzymatiques(s) de ladite plante, ou encore toute modification détectable de la morphologie de ladite plante. Les réponses adaptatives des plantes entraînent notamment la production par les cellules de la plantes de métabolites dits « seconds messagers ». Les seconds messagers englobent les ions calcium, et les espèces réactives de l'oxygène (ROS).

Les « conditions d'environnement » englobent les conditions hydriques, les conditions de salinité, les conditions osmotiques, les conditions oxydatives, et les conditions thermiques. Un changement rapide des conditions d'environnement de la plante est aussi désigné « choc » ou « stress » aux fins de la présente description. Les conditions d'environnement englobent (i) les conditions « biotiques » qui résultent de l'environnement biologique de la plante et (ii) les conditions « abiotiques » qui résultent de l'environnement physico-chimique de la plante.

Les changements de conditions d'environnement consistant en un stress ou choc abiotique englobent les stress ou chocs de salinité, osmotiques, oxydatifs, thermiques, hydriques et les chocs provoqués par la mise en contact de la plante .avec des substances toxiques tels que certains métaux ou certaines substances chimiques toxiques organiques de synthèse ou encore certaines substances chimiques minérales naturelles ou de synthèse. Ils englobent aussi une exposition à un rayonnement ionisant ou non ionisant et une carence ou un excès nutritionnels.

Un stress ou choc de salinité peut être provoqué lorsque la plante pousse sur un sol à forte teneur en chlorure de sodium, par exemple dans les champs ou prairies bordant les côtes maritimes. Un stress de salinité engendre notamment une dérégulation de l'homéostasie et de la distribution ionique dans les tissus végétaux, ce qui entraîne une altération de la germination des semences et de la croissance de la plante.

Un stress ou choc osmotique peut être provoqué artificiellement par une culture sur un substrat riche en mannitol. Un stress osmotique engendre notamment une dérégulation de l'homéostasie et de la distribution ionique dans les tissus végétaux, ce qui entraîne une altération de la germination des semences et de la croissance de la plante.

Un stress ou choc oxydatif peut être provoqué artificiellement par une culture sur du viologène de méthyle. Un stress oxydatif engendre notamment la formation d'espèces réactives de l'oxygène (ROS), une dénaturation des protéines et une dégradation de la chlorophylle, ce qui entraîne un blanchiment de la plante et peut conduire à sa mort.

Un stress ou choc thermique englobe un stress provoqué par la chaleur et un stress provoqué par le froid. Un stress provoqué par la culture à haute température engendre notamment une dénaturation des protéines, ce qui entraîne une altération de la croissance végétale. Un stress provoqué par la culture au froid engendre notamment la formation d'espèces réactives de l'oxygène, la disruption des membranes cellulaires, ce qui entraîne une altération de la croissance végétale.

Un stress hydrique peut être provoqué par une culture en conditions sèches. Un stress hydrique engendre notamment une répression de la croissance cellulaire et de la photosynthèse, ce qui entraîne une altération de la croissance végétale.

Les changements de conditions d'environnement consistant en un stress ou choc biotique englobent les stress ou chocs provoqués par des mises en contact de la plante avec des organismes unicellulaires ou pluricellulaires, par exemple des bactéries, des virus, des champignons, des organismes phytophages, des insectes ou des organismes pathogènes, ou encore les stress ou chocs provoqués par la mise en contact de la plante avec des substances provenant d'organismes unicellulaires ou pluricellulaires. Un stress biotique peut être provoqué par des bactéries, des virus ou des champignons ou des parties de ceux-ci, ou encore des substances d'origine bactérienne, virale ou fongique.

Une composition de formule (I) selon l'invention possède la propriété d'induire directement une voie physiologique impliquée dans la réponse adaptative des plantes à un changement des conditions d'environnement, en l'occurrence l'induction de la voie de signalisation calcique, comme l'illustre l'effet d'augmentation de la concentration d'ions Ca²⁺ qui est montré dans les exemples. Ainsi, une composition de formule (I) induit dans le cytosol des cellules des variations calciques dont le niveau dépend de la quantité de composition de formule (I) qui a été mise en contact avec la plante.

On a aussi montré que la composition de formule (I) induit des changements dans la réponse des plantes à un stress abiotique comme un choc thermique par le froid.

Egalement, les résultats présentés dans les exemples illustrent qu'une composition de formule (I) selon l'invention est capable de stimuler une augmentation de la production de peroxyde d'hydrogène (H₂O₂) en réaction à l'application d'un stress osmotique.

Ainsi, dans certains de ses aspects, l'amélioration de la réponse adaptative des plantes qui est provoquée par la composition de formule (I), au sens de la présente description, englobe :
(i) la propriété d'augmenter de manière détectable la réponse calcique de la plante à un stress abiotique ou biotique, l'augmentation de la réponse calcique étant détectée par la mesure de la concentration en ions Ca²⁺ dans les tissus végétaux, et en particulier dans le cytosol des cellules végétales ; et
(ii) la propriété d'augmenter de manière détectable la production de peroxyde d'hydrogène dans les tissus végétaux en réponse à un stress abiotique ou biotique.

Le fait que la composition de formule (I) selon l'invention possède la propriété d'augmenter la réponse calcique de la plante en réaction à un stress biotique ou abiotique est important, du fait que les ions calcium produits au moment de la réponse calcique sont connus dans l'état de la technique comme des composés dites « seconds messagers » dans les voies de signalisation localisées métaboliquement et chronologiquement très en amont du processus en cascade qui aboutissent à l'induction de réponses adaptatives de la plante ayant subi un stress biotique ou abiotique. Il est connu que l'augmentation de la concentration en ions calcium entraîne l'activation de protéines ayant une affinité ces ions, telles que les calciprotéines. Puis, les calciprotéines activées activent à leur tour d'autres protéines à activité enzymatique, telles que les kinases, ou activent d'autres protéines non enzymatiques, comme des protéines de type « pompes » (Sanders, D., Brownlee, C., and Harper, J.F. (1999). Communicating with calcium. Plant Cell 11, 691-706. Shapiro, A.D. (2005). Nitric oxide signaling in plants. Plant Hormones VOL 72, 339-398; Brownlee, C. (2003). Plant signalling: Calcium first and second. Current Biology 13, R923-R924., Hetherington, A.M., and Brownlee, C. (2004). The generation of Ca2+ signais in plants. Annu Rev Plant Physiol Plant Mol Biol 55, 401-427.; Harper, J.F., Breton, G., and Harmon, A. (2004). Decoding Ca(2+) signais through plant protein kinases. Annu Rev Plant Biol 55, 263-288.; Mori, I.C., Murata, Y., Yang, Y.Z., Munemasa, S., Wang, Y.F., Andreoli, S., Tiriac, H., Alonso, J.M., Harper, J.F., Ecker, J.R., Kwak, J.M., and Schroeder, J.I. (2006). CDPKs CPK6 and CPK3 function in ABA regulation of guard cell S-type anion- and Ca2+-permeable channels and stomatal closure - art. no. e327. Plos Biology 4, 1749-1762.; George, L., Romanowsky, S.M., Harper, J.F., and Sharrock, R.A. (2007). The ACA10 Ca2+ ATPase Regulates Adult Vegetative Development and Inflorescence Architecture in Arabidopsis. Plant Physiol.). Ces processus en cascade contribuent à la mise en place des réponses adaptatives spécifiques de la plante, en réaction au stress initial. Comme réponse adaptative de la plantes, on peut citer par exemple la fermeture de stomates qui permet une limitation de la perte en eau lors de périodes de stress hydrique, la production d'osmolytes à effet protecteur en réaction à un stress thermique ou osmotique, et la production de composés toxiques endogènes qui a pour effet de limiter la progression d'organismes pathogènes.

Le fait que la composition de formule (I) selon l'invention possède la propriété d'augmenter la réponse oxydative, en particulier la production d'espèces réactives de l'oxygène, en réaction à un évènement de stress biotique ou abiotique est très important. Plus précisément, il est particulièrement avantageux qu'une composition de formule (I) selon l'invention provoque notamment une augmentation de la production du peroxyde d'hydrogène, qui est l'espèce réactive de l'oxygène qui est la plus stable et peut donc, en tant que composé « second messager » exercer une action d'induction à distance des réactions cellulaires nécessaire à la réalisation de la réponse adaptative de la plante. On rappelle que la production d'espèces réactives de l'oxygène est à l'origine du déclenchement de la plupart des réponses adaptatives des plantes en réaction à un stress abiotique. On précise aussi que les réponses adaptatives des plantes en réaction à un évènement de stress biotique ou abiotique induisant la production d'espèces réactives de l'oxygène englobent : la dissipation thermique de l'énergie en excès, la dissipation photochimique de l'énergie en utilisant l'oxygène comme accepteur de la chaîne de transport électronique, l'utilisation de toute une série d'enzymes et de molécules anti-oxydantes pour détoxifier les ROS produites, l'implication d'enzymes anti-oxydantes (superoxyde dismutase, catalase, glutathion peroxydases, Ascorbate peroxydase, couple thiorédoxine/thiorédoxine réductase, heat shock protéines), implication de protéines transporteuses du fer et du cuivre (transferrine, ferritine), implication de molécules antioxydantes de petite taille: glutathion, caroténoïdes, vitamines A, C (acide ascorbique), E (tocophérol), ubiquinone, flavonoïdes, bilirubine, et implication de oligo-éléments (cuivre, zinc, sélénium) indispensables comme cofacteurs pour l'activité des enzymes antioxydantes.

Ainsi, dans l'un de ces aspects, l'utilisation de la composition de formule (I) est caractérisée en ce qu'est améliorée la réponse adaptative des plantes à un stress biotique ou abiotique.

Dans certains modes de réalisation, l'utilisation de la composition de formule (I) est caractérisée en ce que le stress abiotique est choisi parmi un stress hydrique, un stress osmotique, un stress thermique et une carence nutritionnelle. Les carences nutritionnelles englobent les carences minérales, y compris les carences en oligo-éléments.

Selon certains autres modes de réalisation, l'utilisation de la composition de formule (I) est caractérisée en ce que le stress biotique inclut notamment un contact avec, ou une infection par, des organismes biologiques, y compris les microorganismes pathogènes contenant de la chitine, ainsi que des substances produites par, ou dérivées de, ces organismes biologiques, y compris la chitine.

De plus, on a aussi montré selon l'invention que la composition de formule (I) possède, notamment par application foliaire, la propriété de stimuler la croissance racinaire des plantes, à la fois des plantes placées en conditions normales de culture et des plantes auxquelles on a appliqué au moins une condition de stress abiotique ou biotique.

Ainsi, dans encore d'autres aspects, l'utilisation selon l'invention est caractérisée en ce que la composition de formule (I) induit aussi un accroissement du développement racinaire des plantes. L'accroissement du développement racinaire peut être visualisé par une augmentation de la vitesse de croissance des racines, par mesure de leur longueur moyenne.

Ainsi, la composition de formule (I) combine (i) un effet d'augmentation de la réponse adaptative des plantes à un changement des conditions d'environnement et (ii) un effet physiostimulant visualisé par l'effet d'accroissement du développement racinaire.

Il est donc montré selon l'invention que la composition de formule (I) provoque, lorsqu'elle est appliquée sur les plantes, préférentiellement par dispersion sur les feuilles, les effets techniques suivants :
- une augmentation de la réponse calcique des plantes aux stress hydrique, osmotique et thermique,
- une augmentation de la réaction à l'élicitation de mécanismes de défense de la plante par l'éliciteur chitine,
- une amélioration du statut oxydatif des cellules végétales, par stimulation de la production d'espèces réactives de l'oxygène, y compris le peroxyde d'hydrogène (H₂O₂),
- une augmentation de la vitesse de croissance des racines des jeunes plantes, et
- une augmentation de la résistance à la sécheresse des jeunes plantes.

En particulier, il est montré dans les exemples les effets suivants de la composition de formule (I) :
*A. au niveau des seconds messagers de la réponse des plantes aux agressions biotiques* / *abiotiques (Ca²⁺ et H₂O₂) impliqués dans les voies de signalisation :*
   a) La composition de formule (I) est perçue par la plante comme un stimulus exogène et induit des voies de signalisation impliquant des variations calciques cytosoliques dans les cellules de plantules *d'Arabidopsis thaliana.* Le traitement par la composition de formule (I) induit des modifications dans l'aptitude de la plante à répondre aux stress.
   b) La production d'espèces réactives de l'oxygène comme (H₂O₂) en réponse à l'éliciteur chitine chez les plantules prétraitées avec la composition de formule (I) est supérieure à celle mesurée chez les plantules pulvérisées avec de l'eau. Ce résultat indique une exacerbation des réactions de défense des plantes prétraitées avec la composition de formule (I) en réponse aux éliciteurs produits par des agents pathogènes.
*B. au niveau de la croissance et du développement de plantules :*
   a) La composition de formule (I) augmente de manière significative la croissance racinaire de plantules *d'Arabidopsis thaliana* dans des conditions normales ou de stress (osmotique ou salin)
   b) La reprise de développement de plantules soumises à un stress hydrique fort, est améliorée par un traitement préalable avec la composition de formule (I).

Les résultats des exemples montrent donc que la composition de formule (I) exerce un effet bénéfique sur la croissance et le développement des plantules, tant dans des conditions normales de culture que dans des conditions de stress.

Dans certains modes de réalisation avantageux, la composition de l'invention possède la formule (II) suivante, qui est englobée par la formule (I) :

| | |
|---|---|
| - azote ammoniacal total (N%) | 0,08% à 1% |
| - potassium exprimé en K20 (%) | 3,5% à 4,5% |
| - Magnésium exprimé en MgO (%) | 0,4% à 0,5% |
| - sodium exprimé en Na₂O (%) | 1,2% à 1,6% |
| - calcium exprimé en CaO (%) | 0% à 0,1% |
| - sulfates totaux exprimés en SO₃ (%) | 3% à 5% |
| - phosphore total exprimé en P₂O₅ (%) | 0% |
| - Chlorures CI (%) | 1 % à 2% |
| - bicarbonates (% de HCO₃) | 1,5% à 1,9% |
| - Bore (%) | 0,1% à 0,15% |
| - cuivre (%) | 0,020% à 0,026% |
| - manganèse (%) | 0,00005% à 0,0002% |
| - iode (%) | 0,025% à 0,031% |
| - zinc (%) | 0,00005% à 0,0002% |
| - fer (%) | 0,0002% à 0,001% |
| - eau | Quantité suffisante pour 100% |

les pourcentages consistant en des pourcentages en poids par rapport au poids total de la composition.

Dans encore d'autres modes de réalisation avantageux, la composition de l'invention possède la formule (III) suivante, qui est englobée par chacune des formules (I) et (II) :

| | |
|---|---|
| - azote ammoniacal total (N%) | 0,09% |
| - potassium exprimé en K20 (%) | 4% |
| - Magnésium exprimé en MgO (%) | 0,45% |
| - sodium exprimé en Na₂O (%) | 1,40% |
| - calcium exprimé en CaO (%) | 0,05% |
| - sulfates totaux exprimés en SO₃ (%) | 3,85% |
| - phosphore total exprimé en P₂O₅ (%) | 0% |
| - Chlorures CI (%) | 1,40% |
| - bicarbonates (% de HCO₃) | 1,7% |
| - Bore (%) | 0,12% |
| - cuivre (%) | 0,023% |
| - manganèse (%) | 0,00005% |
| - iode (%) | 0,028% |
| - zinc (%) | 0,00005% |
| - fer (%) | 0,0003 |
| Eau | En quantité suffisante pour 100% |

les pourcentages consistant en des pourcentages en poids par rapport au poids total de la composition.

La présente invention a encore pour objet l'une quelconque des compositions divulguées dans la présente description, y compris les exemples, et notamment les compositions de formules (I), (II) et (III).

Dans certains modes de réalisation, une composition de formule (I) peut être obtenue selon le protocole détaillé dans le tableau ci-dessous.

| | |
|---|---|
| - eau de ville | Quantité nécessaire pour 100% |
| - iodure de potassium | 0,030 à 0,050 % |
| - chlorure de sodium | 0,8 à 1,2 % |
| - acide borique | 0,6 à 1,0 % |
| - carbonate de sodium | 2,0 à 4,0 % |
| - chlorure de magnésium | 2,0 à 4,0 % |
| - sulfate de potassium | 7,0 à 1,10 % |
| - sulfate de cuivre pentahydraté | 0,05 à 0,15 % |
| - sulfate d'ammonium | 1,5 à 3,5 % |

Les pourcentages ci-dessus consistent en les pourcentages en poids de chaque ingrédient, par rapport au poids total de la composition liquide.

Les différents ingrédients ci-dessus sont ajoutés à de l'eau de ville, à température ambiante, puis la solution obtenue est vigoureusement mélangée jusqu'à obtenir une composition liquide stable. La composition liquide est ensuite filtrée afin d'éliminer les solides non dissous, afin d'obtenir une composition de formule (I) limpide prête à l'emploi.

De manière avantageuse, la composition de formule (I), y compris son exemple spécifique de formule (II), consiste en une formulation liquide sous forme concentrée, qui est diluée dans un certain volume d'eau afin d'obtenir une composition diluée prête à l'emploi.

Ainsi, l'invention concerne aussi l'utilisation d'une composition minérale liquide pour pulvérisation foliaire consistant en une composition concentrée de formule (I), y compris une composition de formule (II), qui a été diluée dans 50 à 10000 fois son volume d'eau, mieux de 100 à 5000 fois son volume d'eau, par exemple de 100 à 1000 fois ou de 400 à 600 fois son volume d'eau, pour améliorer la réponse adaptative des plantes à un changement des conditions d'environnement.

La présente invention concerne aussi l'utilisation d'une composition minérale concentrée de formule (I) caractérisée en ce que, avant pulvérisatiuon foliaire, la composition de formule (I) est diluée dans de l'eau ou dans un liquide aqueux dans une proportion Composition (I)::eau ou liquide aqueux allant de 0,1 ::500 (V/V) à 10::500 (V/V), de préférence allant de 0,5::500 (V/V) à 2::500 (V/V).

Dans la pratique, la composition diluée ci-dessus est avantageusement appliquée sur les plantes par dispersion sur les parties aériennes, préférentiellement par pulvérisation foliaire.

Dans certains modes de réalisation, la composition diluée ci-dessus est appliquée par dispersion sur les parties aériennes des plantes dans des quantités allant de 0,5 L à 20 L par hectare de surface végétale à traiter, mieux de 1 L à 10 L par hectare de surface végétale à traiter, par période d'un an, en une ou plusieurs fractions.

La présente invention est en outre illustrée, sans pour autant y être limitée, par les exemples suivants.

### EXEMPLES

### A. MATERIELS ET METHODES DES EXEMPLES

### A.1. Matériel végétal

Plantules *d'Arabidopsis thaliana* écotype Col 0 (sauvages) ou écotype NoO (transgéniques exprimant la sonde calcique aequorine) âgées de 10 jours.

Les plantules sont cultivées soit *in vitro* en boîtes de Pétri sur milieu nutritif gélosé (milieu MS de Murashige et Skoog), soit sur terreau en pot ou en GiFi.

Pour les cultures *in vitro* des sur plantules, des graines préalablement stérilisées d'*Arabidopsis thaliana* sont semées en lignes d'environ 100 graines.

### A.2. Mesure de la réponse calcique de plantules d'Arabidopsis thaliana

La veille des mesures, 50 plantules d'environ 10 jours sont prélevées à partir d'une culture *in vitro* et réparties dans des boîtes de Pétri par lot de trois dans 500µL d'eau contenant 2µM de coelentarazine, puis incubées à l'obscurité et à température ambiante pendant la nuit. Le lendemain, les mesures sont réalisées au luminomètre en transférant un lot de 3 plantules dans une boîte de Pétri contenant 1mL de solution de composition de formule (III) à la concentration choisie et par enregistrement du signal émis par l'aequorine après mise en contact (par immersion) des plantules avec le produit. Après enregistrement du signal pendant 15 min, l'aequorine est déchargée par injection d'une solution de lyse contenant 100mM CaCl2 afin de calibrer le signal.

### A.3. Mesure de la production de H₂O₂ chez des plantules d'Arabidopsis thaliana

La production d'H₂O₂ par des plantules d'Arabidopsis thaliana agées de 10j a été dosée par la mesure de la luminescence produite par l'oxydation du luminol. Des lots de 3 plantules sont déposés dans des boîtes de Pétri dans le luminomètre, puis la luminescence est mesurée pendant 10 min après injection du milieu de réaction (Luminol 20µM, peroxidase 4 unités, Tris-HCL 5mM pH 7.8) supplémenté soit de mannitol 350mM, soit de chitine 10µg/mL utilisée ici comme contrôle positif capable d'induire la production d' H₂O₂.

### A.4. Mesure de la croissance racinaire de plantules cultivées in vitro pré-traitées par une composition de formule (I)

Pour chaque essai, une ligne de plantules âgées de 10 jours a été traitée par pulvérisation de la composition de formule (III) à 2% puis transférée soit sur milieu normal, soit sur milieu stressant (NaCl 100mM ou Mannitol 350 mM). La croissance des racines a ensuite été suivie quotidiennement.

### A.5. Observation du développement de plantules d'Arabidopsis thaliana en conditions stressantes après un prétraitement par une composition de formule (I)

Des graines *d'Arabidopsis thaliana* ont été semées en pot sur terreau puis cultivées en phytotron (t°=22/20°C, photopériode 9/15, 70% d'humidité) pendant 10 jours *(A. thaliana).*

Les jeunes plantules ont alors été traitées par pulvérisation des feuilles avec de l'eau (témoins) ou avec la composition de formule (III) à 2% dans l'eau, puis ont ensuite été placées dans des conditions stressantes : stress osmotique (arrosage journalier avec du mannitol à 350 mM), stress salin (arrosage avec du NaCl 100 mM), stress hydrique (pas d'arrosage).

Le développement des plantules a ensuite été suivi quotidiennement par photographie.

### Exemple 1 : Préparation d'une composition de formule (I)

On a préparé une composition de formule (I) ayant la formule (III) suivante :

| | |
|---|---|
| - azote ammoniacal total (N%) | 0,09% |
| - potassium exprimé en K20 (%) | 4% |
| - Magnésium exprimé en MgO (%) | 0,45% |
| - sodium exprimé en Na₂O (%) | 1,40% |
| - calcium exprimé en CaO (%) | 0,05% |
| - sulfates totaux exprimés en SO₃ (%) | 3,85% |
| - phosphore total exprimé en P₂O₅ (%) | 0% |
| - Chlorures CI (%) | 1,40% |
| - bicarbonates (% de HCO₃) | 1,7% |
| - Bore (%) | 0,12% |
| - cuivre (%) | 0,023% |
| - manganèse (%) | 0,00005% |
| - iode (%) | 0,028% |
| - zinc (%) | 0,00005% |
| - fer (%) | 0,0003 |
| Eau | En quantité suffisante pour 100% |

les pourcentages consistant en des pourcentages en poids par rapport au poids total de la composition.

La composition de formule (III) a été préparée selon le protocole résumé dans le tableau ci-dessous.

| **Ingrédients** | **Quantité de sel (g)** | **concentration finale de sel ajouté (g/L)** |
|---|---|---|
| eau de ville | 2500,00 | |
| Kl | 1,00 | 0,40 |
| NaCl | 24,00 | 9,60 |
| H₃BO₃ | 20,00 | 8,00 |
| NaHCO₃ | 72,50 | 29,00 |
| MgCl₂ | 65,00 | 26,00 |
| K₂SO₄ | 247,50 | 99,00 |
| CuSO₄,5H₂O | 2,50 | 1,00 |
| (NH₄)₂SO₄ | 62,50 | 25,00 |
| | | |
| **TOTAL** | 495,00 | 198,00 |

Les différents ingrédients sont ajoutés à l'eau de ville, puis la solution est vigoureusement mélangée, jusqu'à obtenir un liquide de composition soluble stable.

Le liquide est alors filtré afin d'obtenir la composition soluble limpide et stable de formule (III) prête à l'emploi. Pour la filtration, on peut utiliser un filtre papier cellulosique PRAT DUMAS® sans cendres ayant une taille de pore allant de 7 à 10 micromètres.

Dans les exemples qui suivent, la composition de formule (III) est utilisée à diverses dilutions allant de 0,01% à 8,00% (volume/volume) dans de l'eau de ville, et la composition diluée résultante est utilisée pour les pulvérisations foliaires.

### Exemple 2 : Mesure de la réponse calcique de plantules d'Arabidopsis thaliana à l'application foliaire d'une composition de formule (I)

On a montré que l'application de la composition de formule (III) induit des variations calciques dans les cellules ce qui prouve que la composition de formule (III) est perçue par la plante comme un stimulus qui induit des réponses d'adaptation chez la plante.

Les résultats sont présentés sur les Figures 1A et 1B, qui illustrent les variations calciques induites dans des plantules d'Arabidopsis thaliana âgées de 10 jours par différentes concentrations de composition de formule (III) (flèche = instant de mise en contact des plantules avec le produit).

A cet effet, des plantules *d'Arabidopsis thaliana* exprimant le gène de l'aequorine dans le cytosol ont été utilisées. Des dilutions de 0.01 à 8 % (V/V) de la composition de formule (III) dans l'eau ont été testées et un contrôle avec de l'eau a été effectué. Au moment de la mise en contact des plantules avec la solution on observe une variation rapide du signal imputable à la manipulation elle-même (chocs mécaniques) et indépendante de la concentration en produit (on l'observe aussi chez les témoins eau).

Les résultats montrent que la composition de formule (III) induit une réponse calcique dose-dépendante bi-modale, présentant un maximum entre 30 secondes et une minute après la mise en contact des plantules avec le produit, suivi d'une phase de retour progressif vers le niveau de base pour des dilutions inférieures à 2% (V/V), ou de plateau prolongé pour des dilutions supérieures à 2% (V/V). Il est à noter qu'au-delà d'une concentration de 2% (V/V) de composition de formule (III), la réponse calcique est rapide, intense et fortement bruitée.

On peut donc conclure de ces essais que :
1) La composition de formule (III), même à la forte dilution de 0,01% (V/V), exerce un effet de stimulation de la réponse calcique des plantes. Le produit induit dans le cytosol des cellules des variations calciques qui varient avec la concentration, et donc la quantité, de composition de formule (III) qui est appliquée sur les feuilles.
2) pour des concentrations supérieures à 2% (V/V), cette réponse calcique présente des caractéristiques différentes de celle obtenue pour des concentrations inférieures 2%. Pour des concentrations supérieures à 2% (V/V), la réponse calcique présente notamment une phase de plateau soutenue (delta [Ca²⁺] > 0.5%), ce qui pourrait impliquer des réponses biologiques finales différentes en réponse à ces signaux calciques « seconds messagers ».

### Exemple 3 : Etude de l'effet à long terme de l'application foliaire d'une composition de formule (I) sur la réponse calcique de plantules d'Arabidopsis thaliana à un choc thermique par le froid

Pour déterminer l'effet d'un prétraitement de plantules *d'Arabidopsis thaliana* par la composition de formule (III) sur la réponse calcique induite par un choc thermique par le froid, des plantules âgées de 10 jours ont été pulvérisées la veille des mesures avec une solution de 2% de composition de formule (III) ou de l'eau (témoin). Environ trois heures après le traitement, ces plantules ont été prélevées et mises à incuber dans la coelentarazine pendant la nuit, comme décrit dans les Matériels et Méthodes. Le lendemain les réponses calciques induites dans ces plantules par le traitement thermique (choc froid) ont été enregistrées.

Le choc froid, obtenu par immersion des plantules dans de l'eau à 4°C, est connu pour induire une réponse calcique rapide, intense et de courte durée.

Les figures 2A et 2B présentent les résultats moyens obtenus dans deux séries d'expériences indépendantes en triplicatas, 24 et 48 heures après le prétraitement avec une composition de formule (III).

Après 24 heures. on observe une différence significative de l'intensité de la réponse induite par le stress selon le prétraitement (composition de formule (III) ou eau).

On montre que le traitement avec la composition de formule (III) exacerbe la réponse au froid de manière significative.

Dans la deuxième série d'essais, le traitement par la composition de formule (III) induit une désensibilisation au froid significative par rapport aux plantes traitées avec de l'eau.

Selon l'essai considéré, la composition de formule (III) a donc un effet soit amplificateur, soit inhibiteur de la réponse qui ne permet pas de tirer de conclusions définitives sur son effet. Après 48 heures sur deux séries d'expériences. il apparaît que le traitement PRP ne se distingue plus du traitement à l'eau (témoin).

En conclusion, les résultats de l'exemple 3 montrent qu'un prétraitement avec une composition de formule (III) à 2% (V/V) induit un changement de comportement des plantes dans la réponse calcique à un choc froid si ce dernier est appliqué dans un délai maximum de 24 heures.

### Exemple 4 : Etude de l'effet à long terme de la composition de formule (I) sur la production de H₂O₂ chez des plantules d'Arabidopsis thaliana en réponse à un choc osmotique ou à un traitement éliciteur par une substance produite par un organisme pathogène.

Dans l'exemple 4, on vise à déterminer l'effet d'un prétraitement de plantules *d'Arabidopsis thaliana* par la composition de formule (III) sur la réponse H₂O₂ induite par un choc osmotique ou par une substance élicitrice produite par un micro-organisme fongique, la chitine. La chitine est utilisée ici comme témoin positif connu pour induire la production d'H₂O₂ et pour mimer des agressions causées par des agents pathogènes capables d'induire des réactions de défense dont l'un des marqueurs est la production d'H₂O₂.

Pour cela, des plantules âgées de 10 jours ont été pulvérisées la veille des mesures avec une solution de 2% de composition de formule (III) ou de l'eau (témoin). Le lendemain la production d'H₂O₂ induite soit par un choc osmotique (Figure 3), soit par la chitine (figure 4) a été mesurée dans ces plantules, comme décrit dans les Matériels et Méthodes.

Les résultats sont présentés sur les figures 3 et 4. Les figures 3 et 4 illustrent la production de H₂O₂ en réponse à un choc osmotique (figure 3) ou à la chitine (figure 4) chez des plantules *d'Arabidopsis thaliana* prétraitées 24 heures auparavant avec de l'eau ou la composition de formule (III) à 2% (V/V).

Dans la réponse au mannitol qui mime ici un stress hydrique, l'intensité des réponses observées est très variable. Le niveau d'intensité mesuré chez les plantules prétraitées avec la composition de formule (III) est inférieur à celui observé chez les plantules prétraitées avec de l'eau. Par contre le mannitol n'induit pas une production d'H₂O₂ significativement différente de celle obtenue en appliquant de l'eau à la place du mannitol sur les plantes préalablement pulvérisées avec de l'eau (H₂O témoin) ou pulvérisées avec la composition de formule (III) (PRP).

Concernant la production d'H₂O₂ induite par la chitine, on peut remarquer que chez les plantules prétraitées par la composition de formule (III), la chitine induit une production de H₂O₂ 4 à 5 fois supérieure à celle des plantules prétraitées par la composition de formule (III) mais incubées en présence d'eau (PRP).

Dans le cas des plantules prétraitées avec de l'eau et stimulées par la chitine, la production d'H₂O₂ n'est pas significativement différente de la stimulation de ces mêmes plantules par l'eau (H₂O Témoin).

En conclusion, les résultats de l'exemple 4 montrent un effet stimulateur de la production de H₂O₂ par la chitine se dégage du prétraitement des plantules avec la composition de formule (III). Ceci indique que les plantules prétraitées par la composition de formule (III) ont la faculté d'exacerber leurs réactions de défense en réponse à une éventuelle infection par un agent pathogène contenant ou produisant de la chitine tel que des champignons.

### Exemple 5 : Effet à long terme de la composition de formule (I) sur la croissance racinaire de plantules d'Arabidopsis thaliana cultivées in vitro.

Dans l'étude de l'exemple 5, des plantules *d'Arabidopsis thaliana* cultivées en boîtes de milieu agarosé ont été pulvérisées soit avec une composition de formule (III) à 2% (V/V), soit avec de l'eau.

Le lendemain, ces plantules ont été transférées dans de nouvelles boîtes soit sur milieu normal, soit sur milieu stressant contenant 100mM de NaCl ou 350 mM de mannitol.

La longueur de la racine principale des plantules a ensuite été mesurée quotidiennement.

La Figure 5 présente le résultat des mesures effectuées 24 heures après le transfert, sur 20 à 30 plantules par lot. Malgré une variabilité assez importante des longueurs, on observe un effet global du produit PRP-EPV sur la croissance racinaire très significatif (p<0.01) : l'accroissement de longueur de la racine principale est plus grand chez les plantules pré-traitées avec la composition de formule (III) que chez les plantules traitées avec H₂O, que ce soit dans des conditions témoins (non stressées) ou stressées (NaCl ou mannitol). A la lecture du graphe on constate que les plantules prétraitées résistent mieux au stress que les plantules témoins.

En conclusion, les résultats de l'exemple 5 montrent que la composition de formule (III) à un effet positif sur la croissance de la racine primaire. Cette meilleure croissance y compris en situations de stress favorise une meilleure tolérance aux stress hydrique.

### Exemple 6: Effet à long terme de la composition de formule (I) sur le développement de plantules d'Arabidopsis thaliana cultivées en pot

Pour tester l'effet de la composition de formule (III) sur la résistance de plantules *d'Arabidopsis thaliana* à divers stress, des plantules cultivées en pots et âgées de 10 jours ont été traitées par pulvérisation avec une composition de formule (III) à 2% (V/V) ou de l'eau (témoins), puis arrosées les jours suivants avec de l'eau contenant soit 350 mM de mannitol (stress osmotique simulant le stress hydrique) ou 100 mM de NaCI (stress salin), soit laissées sans arrosage (stress hydrique).

Après 2 semaines de traitement stressant les plantules ont été arrosées normalement avec de l'eau pure.

On observe que les traitements ont le même effet sur le développement des plantules qu'elles aient été prétraitées ou non avec la composition de formule (III).

En revanche, il semble qu'après un stress hydrique par arrêt d'arrosage, la reprise de développement après réhydratation soit améliorée chez les plantules ayant été prétraitées avec une composition de formule (III). Cette meilleure reprise étant beaucoup plus nette après 10 jours d'hydratation.

Conclusion : les résultats de l'exemple 6 montrent que le prétraitement avec la composition de formule (III) améliore la récupération des plantes après un fort stress hydrique (dessèchement des parties aériennes).

## Revendications

1. Utilisation d'une composition minérale liquide concentrée pour pulvérisation foliaire comprenant la formule (I) suivante :
| | |
|---|---|
| - azote ammoniacal total (N%) | 0,08% à 2% |
| - potassium exprimé en K₂O (%) | 3% à 6% |
| - Magnésium exprimé en MgO (%) | 0,4% à 0,8% |
| - sodium exprimé en Na₂O (%) | 1 % à 2% |
| - calcium exprimé en CaO (%) | 0% à 0,5% |
| - sulfates totaux exprimés en SO₃ (%) | 3% à 6% |
| - phosphore total exprimé en P₂O₅ (%) | 0% |
| - Chlorures CI (%) | 1% à 2% |
| - bicarbonates (% de HCO₃) | 1,2% à 3,0% |
| - Bore (%) | 0,1 à 0,2% |
| - cuivre (%) | 0,018% à 0,03% |
| - manganèse (%) | 0,00005% à 0,006% |
| - iode (%) | 0,02% à 0,04% |
| - zinc (%) | 0,00005% à 0,006% |
| - fer (mg/kg) | 0,0002 à 0,003 |
| | |
| - eau | Quantité suffisante pour 100% |
les pourcentages consistant en des pourcentages en poids par rapport au poids total de la composition, pour améliorer la réponse adaptative des plantes à un changement des conditions d'environnement.

2. Utilisation selon la revendication 1, **caractérisée en ce qu'**est améliorée la réponse adaptative des plantes à un stress biotique ou abiotique.

3. Utilisation selon la revendication 2, **caractérisée en ce que** le stress abiotique est choisi parmi un stress hydrique, un stress osmotique, un stress thermique, un stress de surexposition à un rayonnement ionisant ou non ionisant, une carence nutritionnelle, un stress provoqué par des composés toxiques.

4. Utilisation selon la revendication 2, **caractérisée en ce que** le stress biotique est choisi parmi les bactéries, les virus, les champignons, les organismes phytophages, les insectes et les pathogènes.

5. Utilisation selon l'une des revendications 1 à 4, **caractérisée en ce que** la composition de formule (I) induit aussi un accroissement du développement racinaire des plantes.

6. Utilisation selon l'une des revendications 1 à 5, **caractérisée en ce que**, avant pulvérisation foliaire, la composition concentrée de formule (I) est diluée dans de l'eau ou dans un liquide aqueux dans une proportion Composition (I) ::eau ou liquide aqueux allant de 0,1::500 (V/V)à 10::500 (V/V).

7. Utilisation selon la revendication 6, **caractérisée en ce que** la composition concentrée de formule (I) est diluée dans de l'eau ou dans un liquide aqueux dans une proportion composition (I) ::eau ou liquide aqueux allant de 0,5::500 (V/V) à 2::500 (V/V).

## Patentansprüche

1. Verwendung einer konzentrierten flüssigen Mineralzusammensetzung für die Blattspritzung mit der folgenden Rezeptur (I):
| | |
|---|---|
| - Ammoniakstickstoff insgesamt (N%) | 0,08% bis 2% |
| - Kalium als K₂O (%) | 3% bis 6% |
| - Magnesium als MgO (%) | 0,4 bis 0,8% |
| - Natrium als Na₂O (%) | 1% bis 2% |
| - Calcium als CaO (%) | 0% bis 0,5% |
| - Gesamtsulfate als SO₃ (%) | 3% bis 6% |
| - Gesamtphosphor als P₂O₅ (%) | 0% |
| - Chloride Cl (%) | 1% bis 2% |
| - Bicarbonate (% HCO₃) | 1,2% bis 3,0% |
| - Bor (%) | 0,1 bis 0,2% |
| - Kupfer (%) | 0,018% bis 0,03% |
| - Mangan (%) | 0,00005 bis 0,006% |
| - Iod (%) | 0,02% bis 0,04% |
| - Zink (%) | 0,00005% bis 0,006% |
| - Eisen (mg/kg) | 0,0002 bis 0,003 |
| - Wasser | ad 100% |
wobei die Prozentsätze aus den Gewichtsprozentsätzen in Bezug auf das Gesamtgewicht der Zusammensetzung bestehen, zur Verbesserung der adaptiven Reaktion von Pflanzen auf eine Veränderung der Umweltbedingungen.

2. Verwendung nach Anspruch 1, **dadurch gekennzeichnet, dass** die adaptive Reaktion von Pflanzen auf einen biotischen oder abiotischen Stress verbessert wird.

3. Verwendung nach Anspruch 2, **dadurch gekennzeichnet, dass** der abiotische Stress aus Wasserstress, osmotischem Stress, Hitzestress, Stress einer Überexponierung gegenüber ionisierender oder nichtionisierender Strahlung, Nährstoffmangel, durch toxische Verbindungen erzeugtem Stress ausgewählt ist.

4. Verwendung nach Anspruch 2, **dadurch gekennzeichnet, dass** der biotische Stress aus Bakterien, Viren, Pilzen, phytophagen Organismen, Insekten und Pathogenen ausgewählt ist.

5. Verwendung nach einem der Ansprüche 1 bis 4, **dadurch gekennzeichnet, dass** die Zusammensetzung der Rezeptur (I) auch eine Verstärkung der Wurzelbildung der Pflanzen induziert.

6. Verwendung nach einem der Ansprüche 1 bis 5, **dadurch gekennzeichnet, dass** die konzentrierte Zusammensetzung der Rezeptur (I) vor der Blattspritzung mit Wasser oder einer wässrigen Flüssigkeit im Verhältnis Zusammensetzung (I):Wasser oder wässrige Flüssigkeit von 0,1:500 (v/v) bis 10:500 (v/v) verdünnt wird.

7. Verwendung nach Anspruch 6, **dadurch gekennzeichnet, dass** die konzentrierte Zusammensetzung der Rezeptur (I) mit Wasser oder einer wässrigen Flüssigkeit im Verhältnis Zusammensetzung (I):Wasser oder wässrige Flüssigkeit von 0,5:500 (v/v) bis 2:500 (v/v) verdünnt wird.

## Claims

1. The use of a concentrated liquid mineral composition for leaf spraying comprising the following formula (I):
| | |
|---|---|
| - total ammoniacal nitrogen (N%) | 0.08% to 2% |
| - potassium expressed as K₂O (%). | 3% to 6% |
| - magnesium expressed as MgO (%) | 0.4% to 0.8% |
| - sodium expressed as Na₂O (%) | 1 % to 2% |
| - calcium expressed as CaO (%) | 0% to 0.5% |
| - total sulphates expressed as SO₃ (%) | 3% to 6% |
| - total phosphorus expressed as P₂O₅ (%) | 0% |
| - chlorides Cl (%) | 1 % to 2% |
| - bicarbonates (% of HCO₃) | 1.2% to 3.0% |
| - boron (%) | 0.1 to 0.2% |
| - copper (%) | 0.018% to 0.03% |
| - manganese (%) | 0.00005% to 0.006% |
| - iodine (%) | 0.02% to 0.04% |
| - zinc (%) | 0.00005% to 0.006% |
| - iron (mg/kg) | 0.0002 to 0.003 |
| | |
| - water | water in a sufficient amount for 100% |
the percentages consisting in percentages by weight compared to the total weight of the composition, for improving the adaptive response of plants to a change in environmental conditions.

2. The use according to claim 1, **characterised in that** the adaptive response of plants to biotic or abiotic stress is improved.

3. The use, according to claim 2, **characterised in that** the abiotic stress is chosen from among water stress, osmotic stress, heat stress, stress from overexposure to ionising or non-ionising radiation, nutritional deficiency, stress caused by toxic substances.

4. The use, according to claim 2, **characterised in that** the biotic stress is chosen from among bacteria, viruses, fungi, plant-eating organisms, insects and pathogens.

5. The use according to one of claims 1 to 4, **characterised in that** the concentrated composition with the formula (I) also brings about an increase in the root development of plants.

6. The use according to one of claims 1 to 5, **characterised in that**, before leaf spraying, the composition with the formula (I) is diluted in water or in an aqueous liquid in a proportion Composition (I): water or aqueous liquid ranging from 0.1:500 (VN) to 10:500 (V/V).

7. The use according to claim 6, **characterised in that** the concentrated composition with the formula (I) is diluted in water or in an aqueous liquid in a proportion composition (I):water or aqueous liquid ranging from 0.5:500 (V/V) to 2:500 (VN).
